(19) Europäisches Patentamt
European Patent Office
Office européen des brevets

(11) **EP 1 636 076 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(21) Anmeldenummer: **04734844.6**

(22) Anmeldetag: **26.05.2004**

(51) Int Cl.:
***B60T 8/1755*** (2006.01)

(86) Internationale Anmeldenummer:
**PCT/EP2004/050927**

(87) Internationale Veröffentlichungsnummer:
**WO 2004/103786 (02.12.2004 Gazette 2004/49)**

(54) **VERFAHREN ZUM REGELN EINES PROZESSES ZUR DURCHFÜHRUNG EINER FAHRSTABILITÄTSREGELUNG**

METHOD FOR CONTROLLING A PROCESS FOR CONTROLLING THE DRIVING STABILITY

PROCEDE DE REGLAGE D'UN PROCESSUS POUR EFFECTUER LE REGLAGE DE LA STABILITE DE CONDUITE

(84) Benannte Vertragsstaaten:
**DE FR IT**

(30) Priorität: **26.05.2003 DE 10324131**

(43) Veröffentlichungstag der Anmeldung:
**22.03.2006 Patentblatt 2006/12**

(73) Patentinhaber: **Continental Teves AG & Co. oHG 60488 Frankfurt am Main (DE)**

(72) Erfinder:
• **WANKE, Peter**
**60437 Frankfurt (DE)**
• **LÜDERS, Ulrich**
**31303 Burgdorf (DE)**
• **OKUMOTO, Nobuaki**
**Asahi-shi Chiba (JP)**
• **GÄRTNER, Michael**
**60439 Frankfurt am Main (DE)**

(56) Entgegenhaltungen:
EP-A1- 0 943 514        WO-A2-01/72571
DE-A- 4 419 650         DE-A- 10 141 273
DE-A- 19 749 005        DE-A- 19 830 561
DE-A1- 4 418 731        US-A- 5 790 970
US-A1- 2003 042 790     US-B1- 6 427 102
US-B1- 6 427 130

**Beschreibung**

Die Erfindung betrifft ein Verfahren zum Regeln eines Prozesses, bei dem eine Stellgröße in Abhängigkeit einer anhand eines Vergleichs eines Sollwerts mit einem Istwert einer Regelgröße ermittelten Regelabweichung gebildet wird.

Das Verfahren eignet sich besonders zur Durchführung einer Fahrstabilitätsregelung für ein Fahrzeug.

Unter dem Begriff Fahrstabilitätsregelung vereinigen sich mehrere Prinzipien zur Beeinflussung des Fahrverhaltens eines Fahrzeugs durch vorgebbare Drücke in oder Bremskräfte an einzelnen Radbremsen, Eingriff in das Motormanagement, Überlagerung des von einem Fahrer eingestellten Lenkwinkels mit einem Zusatzlenkwinkel und Eingriff in Dämpfer an den Rädern oder Stabilisatoren an den Achsen. Als Ausführungsformen von Fahrdynamikregelungen sind dabei insbesondere Bremsschlupfregelungen (ABS), die ein Blockieren einzelner Räder während eines Bremsvorgangs verhindern, Antischlupfregelungen (ASR) bzw. Traktionskontrollen (TCS), die ein Durchdrehen der Antriebsräder unterbinden, elektronische Bremskraftverstärkungen (EBV) zur Regelung der Verhältnisse zwischen der Bremskraft an der Vorder- und Hinterachse, Kippregelungen (ARP) zum Verhindern des Kippens eines Fahrzeugs um seine Längsachse und Giermomentregelungen (ESP) zum Stabilisieren des Fahrzeugs zu nennen.

Ein Fahrstabilitätsregler der zudem über eine reibwertabhängige Begrenzung einer Referenzgierrate verfügt, ist beispielsweise in der deutschen Offenlegungsschrift DE 195 15 059 beschrieben.

Der dargestellte Regelkreis bezieht sich auf ein Kraftfahrzeug mit vier Rädern, das mit einer hydraulischen, elektro-hydraulischen oder elektro-mechanischen Bremsanlage ausgerüstet ist. In hydraulischen Bremsanlagen wird mittels eines pedalbetätigten Hauptzylinders vom Fahrer Bremsdruck aufgebaut, während die elektro-hydraulischen und elekromechanischen Bremsanlagen eine von einem sensierten Fahrerbremswunsch abhängige Bremskraft aufbauen. Im Folgenden wird auf eine hydraulische Bremsanlage Bezug genommen.

Zur Erfassung von fahrdynamischen Zuständen sind bei dem Regler ein Drehzahlsensor für jedes Rad, ein Gierratensensor, ein Querbeschleunigungssensor und ein Drucksensor zum Erfassen des mit Hilfe eines Bremspedals erzeugten Bremsdruck vorgesehen.

Üblicherweise wird bei Verwendung eines aus mehreren Sensoren bestehenden Sensorclusters eine Rückfalllösung für den Regler realisiert, so dass beim Ausfall eines Teils der Sensorik jeweils nur der Bestandteil der Regelung abgeschaltet wird, der Messwerte der ausgefallenen Sensoren als Eingangsgrößen benötigt.

Ein Sensorcluster zur Durchführung einer Fahrdynamikregelung ist beispielsweise auch in der deutschen Offenlegungsschrift DE 198 11 547 beschrieben.

Die Funktion der Sensoren kann durch Plausibilitätsprüfungen anhand von analytischen Redundanzen überwacht werden. Üblicherweise werden dabei anhand von Signalen mehrerer Sensorenwerte gleicher physikalischer Größen ermittelt und miteinander verglichen.

Zum Schutz von Sensoren sind ebenfalls Anordnungen aus dem Stand der Technik bekannt. So geht aus der deutschen Offenlegungsschrift DE 199 21 692 A1 eine Anordnung zum Schutz von elektronischen Funktionseinheiten vor Störgrößen hervor, bei der die Funktionseinheiten in Teileinheiten unterschiedlicher Empfindlichkeit gegenüber Störsignalen klassifiziert werden. Für diese Teileinheiten sind unterschiedliche Abschirmungen vorgesehen, wobei sich mindestens zwei der Abschirmungen zu einer Abschirmung mit höherem Wirkungsgrad als die einzelnen Abschirmungen ergänzen.

Somit ist es möglich, das Auftreten von Fehlern in der Sensorik zu erkennen bzw. weitgehend zu vermeiden. Die Rückfalllösungen sorgen ferner dafür, dass keine fehlerhafte Regelung vorgenommen wird, bei der sicherheitskritische Werte von Stellgrößen auftreten könnten.

Dennoch ist es in vielen Fällen wünschenswert, die Regelungsfunktion beim Ausfall eines Sensors aufrecht zu erhalten. Dies gilt insbesondere für Fahrstabilitätsregelungen, die zur Erhöhung der Sicherheit in einem Fahrzeug dienen.

Ferner ergibt sich auch nach erfolgreicher Markteinführung eines technischen Regelsystems oftmals der Wunsch, Sensoren einzusparen. Die Systemfunktionalität sollte bei einem Entfall von Sensoren jedoch in ausreichender Weise gewährleistet bleiben.

Der Erfindung liegt somit die Aufgabe zugrunde, die Regelung eines Prozesses auch dann zuverlässig und sicher durchführen zu können, wenn kein den Wert einer Regelgröße repräsentierendes Signal eines Sensors vorliegt.

Erfindungsgemäß wird diese Aufgabe durch ein Verfahren nach dem Patentanspruch 1 gelöst.

Die Erfindung sieht dabei vor, dass ein Verfahren zum Regeln eines Prozesses, bei dem ein Regelbedarf in Abhängigkeit einer aus dem Vergleich eines Sollwerts mit einem Istwert einer Gierrate ermittelten Regelabweichung ermittelt wird, so durchgeführt wird, dass der Istwert der Regelgröße anhand eines ersten Prozessmodells bestimmt wird und der Regelbedarf zusätzlich überprüft wird, indem Regelbedürfnisse aufgrund von Werten der Gierrate , die anhand von weiteren Prozessmodellen bestimmt werden, ermittelt und durch logische Verknüpfungen miteinander verknüpft werden.

Die Erfindung stellt somit ein Verfahren bereit, das es ermöglicht, eine Regelungsfunktion auch bei einem Ausfall oder einem Entfall eines Sensorsignals beizubehalten. Das Verfahren hat dabei insbesondere den Vorteil, dass fehlerhafte Regeleingriffe, die durch Störungen der verbleibenden Sensorik hervorgerufen werden können, vermieden werden.

Die Grundidee der Erfindung ist dabei, dass ein Signal, das den Istwert der Gierrate repräsentiert, in einem geeigneten Modell nachgebildet wird und der Regelbedarf anhand weiterer Modelle überprüft wird, die zwar zur quantitativen Nachbildung des Wertes der Regelgröße weniger geeignet sind als das erste Modell, von denen jedoch jedes weniger anfällig gegenüber Fehlern bei Messgrößen ist.

In einer besonders bevorzugten Durchführungsform des erfindungsgemäßen Verfahrens werden die weiteren Prozessmodelle daher mit verschiedenen Teilmengen einer Menge von gemessenen Größen gebildet. Damit ist sichergestellt, dass die weiteren Prozessmodelle unabhängig von wenigstens einer gemessenen Größe konstruiert werden und somit jedes der Teilmodelle unbeeinflusst von wenigstens einem Messfehler bleibt. Die Werte der Regelgröße werden dabei vorzugsweise anhand von wenigstens zwei weiteren Prozessmodellen bestimmt. Damit besteht eine aus mindestens zwei Werten konstituierte analytische Redundanz für den Wert der Regelgröße, die zu einer sehr fundierten Bewertung des Regelbedarfs herangezogen wird.

Die weiteren Prozessmodelle sind - da sie im Allgemeinen mit weniger Größen gebildet werden als das erste Prozessmodell-weniger komplex als das erste Modell und erlauben somit auch keine so präzise Nachbildung des Messsignals der Regelgröße wie dieses Modell. Die Erfindung schafft jedoch die Möglichkeit, die Notwendigkeit eines Regeleingriffs anhand der weiteren Modelle zu überprüfen.

Erfindungsgemäß wird ein Regelbedarf nur dann festgestellt, wenn für die Mehrzahl der weiteren Prozessmodelle ein Regelungsbedarf besteht.

Dieser Regeleingriff kann dann so erfolgen, dass der Wert einer Stellgröße allein aus der Regelabweichung zwischen dem anhand des ersten Prozessmodells ermittelten Istwert der Regelgröße und dem Sollwert bestimmt wird. Ein derartiger Regeleingriff wird im Folgenden als uneingeschränkter Regeleingriff bezeichnet.

Um die Auswirkungen eines möglicherweise fehlerhaft eingeschätzten Regelbedarfs gering zu halten, ist es vorteilhaft vorgesehen, dass ein uneingeschränkter Regeleingriff nur vorgenommen wird, wenn für alle weiteren Prozessmodelle ein Regelungsbedarf besteht.

Wenn zwar für die Mehrzahl jedoch nicht für alle der Prozessmodelle ein Regelungsbedarf besteht, so ist es in einer bevorzugten Durchführungsform des erfindungsgemäßen Verfahrens vorgesehen, einen Regeleingriff mit einer im Vergleich zu einem uneingeschränkten Eingriff verringerten Dauer oder mit einer im Vergleich zu einem uneingeschränkten Eingriff verminderten Stärke vorgesehen. Derartige Regeleingriffe werden im Folgenden als eingeschränkte Regeleingriffe bezeichnet.

In vielen Regelungssystemen besteht darüber hinaus die Möglichkeit, anhand einzelner Messwerte oder anhand des zeitlichen Verlaufs von Messsignalen die Situation eines Gesamtprozesses zu ermitteln. Diese Regelungssysteme sind damit in der Lage, die Güte einzelner Messsignale situationsabhängig zu beurteilen. Ferner besteht in vielen Regelungssystemen eine Konfiguration, in der eine Steuerung von Aktuatoren die Messsignale beeinflusst.

Da die Aktuatoren von dem Regelungssystem selbst gesteuert werden, ist auch hier eine Beurteilung der Güte der Messsignale durch das Regelungssystem möglich. In den beschriebenen Regelungssystemen kann also eine situationsabhängige Beurteilung der Zuverlässigkeit der verschiedenen Prozessmodelle vorgenommen werden.

Erweist sich ein bestimmtes Prozessmodell in einer Situation als besonders zuverlässig, ist es vorteilhaft, dass die Regelung des Prozesses anhand dieses Modells nicht nur qualitativ entsprechend der bislang beschriebenen Durchführungsformen des erfindungsgemäßen Verfahrens vorgenommen wird, sondern auch quantitativ in Abhängigkeit des in diesem Modell ermittelten Wertes der Regelgröße.

In einer weiteren bevorzugten Durchführungsform des Verfahrens wird der Wert, der bei einem Regelbedarf durch den Regler gebildeten Stellgröße daher in Abhängigkeit wenigstens eines anhand der weiteren Prozessmodelle ermittelten Wertes der Regelgröße modifiziert.

Das erfindungsgemäße Verfahren beinhaltet den Vorteil, dass es sich ohne grundlegende Änderungen sowohl in einem Stand-Alone-System auch innerhalb einer Notlauffunktion eines bestehenden Systems durchführen lässt.

Durch die Anwendung des Verfahrens ist es möglich, eine Notlauflogik zu realisieren, die weitgehend auf den Funktionen des Standardsystems basiert.

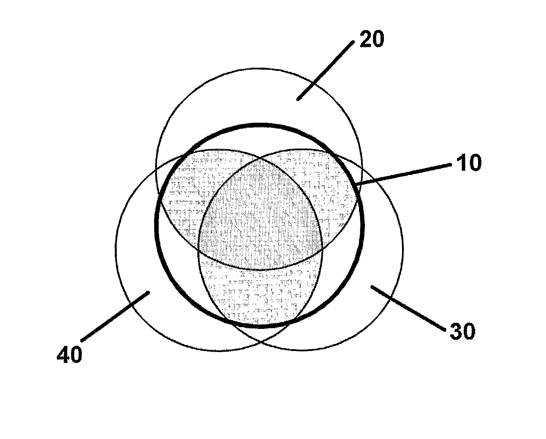

Weitere Vorteile und zweckmäßige Weiterbildungen der Erfindung ergeben sich aus den Unteransprüchen und den nachfolgenden anhand der einzigen Figur dargestellten Ausbildungen der Erfindung.

Die Figur zeigt eine Skizze, in der das erfindungsgemäße Prinzip der kombinierten Betrachtung von Standardlogik und Teilmodellen dargestellt ist.

Die Erfindung stellt ein vorteilhaftes Verfahren zum Regeln eines Prozesses zur Verfügung. Sie sieht vor, dass der Istwert einer Regelgröße in einem Modell ermittelt wird und mittels eines Mehrfachprozessmodells überprüft wird, indem analytische Redundanzen für den Wert der Regelgröße aus Prozessmess- oder Prozessführungsgrößen gebildet werden, und der Istwert anhand einer Auswertung und logischen Verknüpfung der Redundanzen bewertet wird.

Das Verfahren eignet sich besonders vorteilhaft zur Durchführung einer Fahrstabilitätsregelung für ein Fahrzeug.

Im Folgenden wird eine Fahrdynamikregelung beschrieben, die ohne die Signale eines Gierratensensors vorgenommen wird. Ohne grundlegende Änderungen lässt sich das Verfahren jedoch auch auf einen Entfall anderer Sensoren anwenden.

Eine Übertragung auf beliebige Regelsysteme, welche die Bildung entsprechender Ersatzsignale erlauben, ist ebenfalls problemlos möglich. In den jeweiligen Systemen sind dafür analytische Redundanzen zu ermitteln, die aufgrund verschiedener Prozessmodelle bzw. aufgrund von verschiedenen Teilmodellen für den zu regelnden Prozess bestehen, und die einzelnen Modelle sind in Bezug auf ihre Zuverlässigkeit zu bewerten. Nach der Bewertung der Modelle ist dann ein Modell zu ermitteln, in dem der den Regeleingriffen zugrunde liegende Istwert der Regelgröße bestimmt wird, und es sind die Modelle zu ermitteln, mit denen der Regelbedarf durch logische Verknüpfungen der in diesen Modellen ermittelten Regelbedürfnisse überprüft wird.

Die im Folgenden beschriebene Durchführung des erfindungsgemäßen Verfahrens im Rahmen einer Fahrdynamikregelung für ein Fahrzeug lässt sich zum einen als Stand-Alone-Lösung realisieren. Es ist damit möglich eine Giermomentregelung bei einem nicht vorhandenen Gierratensensor vorzunehmen.

Zum anderen kann sie auch als Notlauffunktion in ein bestehendes System zur Fahrdynamikregelung, wie es beispielsweise in der Offenlegungsschrift DE 195 15 059 A1 beschrieben ist, integriert werden.

Die anhand des erfindungsgemäßen Verfahrens durchführbare Fahrdynamikregelung ohne Gierratensensor verwendet Funktionen und Sensoren, die in bekannten Regelsystemen zur Durchführung eines Elektronischen Stabilitätsprogramms (ESP) vorhanden sind. Diese Funktionen und Sensoren können der Offenlegungsschrift DE 195 15 059 A1 entnommen werden.

Ferner kann ein Sensorclusteranschluss gemäß der Offenlegungsschrift DE 199 21 692 und der Offenlegungsschrift DE 198 11 547 übernommen werden.

Die wesentlichen und durch entsprechende Sensoren gemessenen Eingangsgrößen eines derartigen Systems sind der Lenkwinkel $\delta$, die Gierrate $\dot{\psi}$, die Querbeschleunigung $a_{LAT}$ und die Radgeschwindigkeiten $v_{FL}$, $v_{FR}$, $v_{RL}$, $v_{RR}$. Von den Radgeschwindigkeiten bezeichnet dabei $v_{FL}$ die Geschwindigkeit des linken Vorderrades, $v_{FR}$ die Geschwindigkeit des rechten Vorderrades, $v_{RL}$ die Geschwindigkeit des linken Hinterrades und $v_{RR}$ die Geschwindigkeit des rechten Hinterrades.

Eine bevorzugte Ausführungsform der ESP-Regelung sieht vor, eine Regelabweichung zwischen dem gemessenen Istwert der Gierrate $\dot{\psi}$ und einem anhand der gemessenen Werte des Lenkwinkels $\delta$, der Radgeschwindigkeiten $v_{FL}$, $v_{FR}$, $v_{RL}$ und $v_{RR}$ sowie anhand von Fahrzeugparametern p in einem Referenzmodells des Fahrzeugs ermittelten Sollwert zu bestimmen. Aus dieser Regelabweichung werden ein Bremsdruck für jedes Rad und ein Eingriff in das Motormanagement ermittelt, die ein kompensierendes Giermoment bewirken, das die Gierrate $\dot{\psi}$ des Fahrzeugs ihrem Sollwert angleicht.

Ferner wird in Abhängigkeit des vorliegenden Reibwerts eine Referenzgierrate bestimmt, die auch einen Schwellenwert für die physikalisch möglichen Gierraten bildet. Ein Überschreiten dieses Schwellenwertes wird durch die Regelung ebenfalls verhindert.

Zudem verfügt ein ESP-System üblicherweise über Sensoren, welche die aktuellen Zustände der Aktuatoren des Systems erfassen. So beinhalten typische ESP-Systeme beispielsweise einen Drucksensor zum Erfassen eines Bremsdruckes im Hauptbremszylinder, falls das Fahrzeug mit einer hydraulischen Bremsanlage ausgerüstet ist. Andere ESP-Systeme sind darüber hinaus auch mit Drucksensoren zur Erfassung der Bremsdrücke in den einzelnen Radbremsen ausgestattet.

In der zu beschreibenden Ausbildung der Erfindung wird von einem Entfall des Gierratensignals ausgegangen.

Die Gierrate $\dot{\psi}$ wird entsprechend dem erfindungsgemäßen Verfahren in einem Prozessmodell durch die Größen nachgebildet, deren Werte durch die verbleibenden Sensoren gemessen werden.

In diesem mit den Größen $\delta$, $a_{LAT}$, $v_{FL}$, $v_{FR}$, $V_{RL}$, $V_{RR}$ und p gebildeten Modell ergibt sich der Istwert $\dot{\psi}_{EST}$ der Gierrate $\dot{\psi}$ aus den Messwerten der noch vorhandenen Sensoren durch einen Zusammenhang der Form $\dot{\psi}_{EST}=\dot{\psi}_{EST}$ $(\delta,a_{LAT},v_{FL},v_{FR},v_{RL},v_{RR};p)$ und wird mit einem Sollwert verglichen, der ebenfalls anhand der Werte dieser Größen ermittelt wird.

Bei frontgetriebenen Fahrzeugen lässt sich das Ersatzsignal $\dot{\psi}_{EST}$ dabei aus der Beziehung

$$\dot{\psi}_{EST} = c_1(v_{RR} - v_{RL}) - c_2 \cdot a_{LAT} \cdot v_{REF}$$

ermitteln, wobei $c_1$ und $c_2$ Fahrzeugparameter sind und $v_{REF}$ die Referenzgeschwindigkeit des Fahrzeugs bezeichnet, die aus den Größen $v_{FL}$, $v_{FR}$, $v_{RL}$ und $v_{RR}$ gebildet wird.

Für heckgetriebene Fahrzeuge gilt entsprechend

$$\dot{\psi}_{EST} = c_1(v_{FR} - v_{FL}) - c_2 \cdot a_{LAT} \cdot v_{REF}$$

Durch geeignete Signalverarbeitung kann das Rauschen des Signals $\dot{\psi}_{EST}$ reduziert werden. Ebenfalls werden die Phasenverläufe der einzelnen Signale durch geeignete Filterung einander angepasst. Dabei sollte die Filterung so durchgeführt werden, dass der Phasenverlauf des Ersatzsignals $\dot{\psi}_{EST}$ dem tatsächlichen Phasenverlauf der Gierrate $\dot{\psi}$ bestmöglich entspricht. Bei nicht vorhandenem Gierratensensor kann dies anhand von Daten eines Referenzmodells geschehen.

Wird das auf diese Weise in dem Modell ermittelte Ersatzsignal $\dot{\psi}_{EST}$ an Stelle eines gemessenen Gierratensignals $\dot{\psi}$ in ein Mittel zur Durchführung eines ESP-Regelalgorithmus' eingespeist, so kann auf einfache Weise eine Fahrdynamikregelung ohne Gierratensensor durchgeführt werden.

Es muss jedoch mit einer hohen Störanfälligkeit des Regelungssystems gerechnet werden, die sich in einem häufigen Auftreten von unerwünschten Regeleingriffen bemerkbar macht. Zur Korrektur von durch Störeinflüsse beeinflussten Messsignalen und zur Vermeidung von fehlerhaften Regeleingriffen können dabei die im Folgenden beschriebenen Maßnahmen ergriffen werden.

Soweit es möglich ist, werden zusätzliche Statusinformationen herangezogen, um Störungen der zur Bildung des Signals $\dot{\psi}_{EST}$ verwendeten Größen zu erkennen. Wenn es dadurch gelingt, den zeitlichen Verlauf und die Größe einer Störung zu ermitteln, kann ihr Einfluss auf das Signal $\dot{\psi}_{EST}$ direkt kompensiert werden.

Ist beispielsweise das den Wert der Querbeschleunigung $a_{LAT}$ repräsentierende Signal durch eine Neigung der Fahrbahn um einen bekannten Betrag $\Delta a_{LAT,BANK}$ verfälscht, so lässt sich durch die Beziehung

$$\dot{\psi}_{EST} = c_1(v_{FR} - v_{FL}) - c_2 \cdot (a_{LAT} - \Delta a_{LAT,BANK}) \cdot v_{REF}$$

ein korrigiertes Signal $\dot{\psi}_{EST}$ ermitteln. Eine Querneigung der Fahrbahn lässt sich dabei dadurch erkennen, dass die Radgeschwindigkeiten, die Querbeschleunigung oder der Lenkwinkel mit unterschiedlichen Meßsystemen und/oder Modellen, die auf unterschiedlichen physikalischen Verfahren beruhen, zeitgleich ermittelt werden und deren unterschiedliche Größe, die sich aufgrund der Fehler in geneigten Kurven ergeben, zur Erkennung der seitlich geneigten Kurve verwendet werden.

In analoger Weise können ebenfalls Variationen der Fahrzeugparameter $c_1$ und $c_2$, die etwa durch eine veränderte Beladung des Fahrzeugs hervorgerufen werden, kompensiert werden, wenn die Abweichungen durch einen geeigneten Algorithmus identifiziert werden konnten.

Ferner treten häufig Störungen auf, die durch das Regelsystem selbst verursacht werden bzw. von diesem beeinflusst werden können. Für diese Störungen ist dann in der Regel der zeitliche Verlauf, nicht jedoch ihre Größe bekannt.

Werden beispielsweise eine oder mehrere Radbremsen des Fahrzeugs betätigt, so entsprechen die von Raddrehzahlsensoren gemessenen Werte für die Radgeschwindigkeiten $v_{FL}$, $v_{FR}$, $v_{RL}$ und $v_{RR}$ nicht dem tatsächlichen Fahrzeugverhalten.

Eine solche Störung der Signale der Raddrehzahlsensoren kann aktiv dadurch eliminiert werden, dass Drücke in den Bremsen der Hinterräder abgebaut werden, deren Raddrehzahlsensoren Eingangssignale für das Regelungssystem liefern. Der Druckabbau an den Hinterrädern kann jedoch selbstverständlich nicht dauerhaft zur Verbesserung der Messergebnisse angefordert werden, da mit dem Druckabbau auch eine massive Einbuße in der Bremsleistung des Fahrzeugbremssystems verbunden ist.

Es ist daher vorgesehen, dass zunächst anhand von nicht durch eine bekannte Störung betroffenen Messsignalen festgestellt wird, ob eine Situation vorliegt, in welcher der in einem bestimmten Prozessmodell anhand des bekanntermaßen gestörten Signals berechnete Istwert der Regelgröße für einen eventuellen Regeleingriff benötigt wird.

Ergibt sich also beim Abbremsen eines Fahrzeugs ein Regelungsbedarf für das ESP-System anhand eines in einem mit dem Lenkwinkel $\delta$ und der Querbeschleunigung $a_{LAT}$ gebildeten Prozessmodell bestimmten Werts für die Gierrate $\dot{\psi}$, so wird ein aktiver Druckabbau an den Hinterrädern vorgenommen.

Der tatsächliche Regelbedarf und der Werte der Stellgröße wird dann anhand des mit dem die Radgeschwindigkeiten $v_{RL}$ und $v_{RR}$ beinhaltenden Modells $\dot{\psi}_{EST}$ $(a_{LAT}, v_{RL}, v_{RR}; p)$ für ein frontgetriebenes Fahrzeug bestimmt, sobald aufgrund einer Auswertung von weiteren Sensorsignalen oder Modellrechnungen davon ausgegangen werden kann, dass die Signale der Raddrehzahlsensoren keiner Störung mehr unterliegen. Dies kann beispielsweise in Abhängigkeit eines Modells zur Ermittlung der Drücke in den Radbremsen der Hinterräder festgestellt werden.

Die Regelung erfolgt nach dem Druckabbau genau wie im ungestörten Fall, der hier dem ungebremsten Fall entspricht.

Vorteilhafterweise ergibt sich bei einem Druckabbau an der Hinterachse häufig auch ohne bewusste Reaktion des Fahrers, d.h. bei konstanter Pedalkraft, eine leichte Druckerhöhung an der Vorderachse, so dass im teilgebremsten Fall in der Regel keine Verzögerungseinbußen zu beobachten sind.

Ist der zeitliche Verlauf einer Störung zwar bekannt, eine aktive Einflussnahme wie oben geschildert technisch jedoch nicht möglich oder nicht erwünscht, so besteht weiterhin die Möglichkeit, die Regelfunktion durch eine temporäre Verwendung eines zweiten Ersatzsignals aufrecht zu erhalten.

Falls in dem ersten Modell bereits alle zur Verfügung stehenden Messsignale berücksichtigt sind, kann es sich dabei dem zur Bestimmung des zweiten Ersatzsignals verwendeten Modells nur um ein Teilmodell handeln.

Der dargestellte Fall entspricht damit der Durchführungsform des erfindungsgemäßen Verfahrens, bei welcher der Wert der Stellgröße situationsabhängig in Abhängigkeit wenigstens eines anhand der weiteren Prozessmodelle ermittelten Wertes verändert wird. Es ist dabei sogar der Extremfall realisiert, bei dem der Wert der Stellgröße ausschließlich in Abhängigkeit des anhand eines weiteren Prozesses ermittelten Wertes bestimmt wird.

Soll beispielsweise in einem frontgetriebenen Fahrzeug während einer Untersteuersituation ein aktiver Druckaufbau an der Hinterachse zum Stabilisieren des Fahrzeugs durchgeführt werden, der eine Störung für die Signale der Raddrehzahlsensoren darstellt, so kann durch den Ausdruck

$$\dot{\psi}_{EST,TEMP} = \frac{a_{LAT}}{v_{REF}} - \Delta\dot{\psi}_{EST}$$

für die Zeit des Bremseneingriffs ein temporäres Ersatzsignal $\dot{\psi}_{EST,TEMP}$ bestimmt werden, das für die Dauer des Bremseingriffs an den Hinterrädern als ein den Istwert der Regelgröße repräsentierendes Signal verwendet werden kann. Die Stellgrößen werden durch die ESP-Regelung dann aus der Regelabweichung zwischen dem Wert $\dot{\psi}_{EST,TEMP}$ und dem Sollwert der Gierrate $\dot{\psi}$ gebildet.

Die Größe $\Delta\dot{\psi}_{EST}$ in dem vorangegangenen Ausdruck stellt dabei die Differenz zwischen den Werten des Signals $\dot{\psi}_{EST}$ und des Gierratensignals $a_{LAT}/v_{REF}$ zum Zeitpunkt des Umschaltens zwischen den beiden Signalen dar und wird in den Ausdruck aufgenommen, um Signalsprünge beim Umschalten zu vermeiden.

Das temporäre Ersatzsignal $\dot{\psi}_{EST,TEMP}$ wird anhand eines Prozessmodells gebildet, welches das Fahrzeugverhalten im Allgemeinen nicht mit hinreichender Genauigkeit nachbildet.

Es ist daher durch eine geeignete Situationserkennung festzustellen, ob das Ersatzsignal $\dot{\psi}_{EST,TEMP}$ verwendet werden kann bzw. mit welchem der zur Verfügung stehenden Ersatzsignale zuverlässige Werte für die Regelgröße bestimmt werden können. Um negative Auswirkungen der verminderten Genauigkeit des temporären Ersatzsignals $\dot{\psi}_{EST,TEMP}$ zu begrenzen, kann es sich als vorteilhaft erweisen, einen Regeleingriff auf Basis des temporären Ersatzsignals in seiner Dauer zu begrenzen, um so nach einer definierten Zeitdauer wieder das genauere Signal $\dot{\psi}_{EST}$ verwenden zu können.

Darüber hinaus werden Störungen der Signale durch Unzulänglichkeiten der Sensoren verursacht, zu denen beispielsweise Rauschen und Signalfehler zu zählen sind, oder die durch unvorhersehbare Änderungen der Umgebungsbedingungen verursacht werden. Als Beispiel für eine solche Änderung können etwa Fahrbahnunebenheiten genannt werden.

Der Einfluss dieser Störungen auf den in einem Modell bestimmten Wert der Gierrate können nicht durch die vorstehend beschriebenen Methoden kompensiert werden, wenn weder die Größe dieser Störeinflüsse noch deren zeitlicher Verlauf bekannt sind. Sie stellen damit echte Störeinflüsse im Sinne der Regelungstechnik dar und eine Absicherung gegen durch diese Störungen verursachte Regeleingriffe kann mit Hilfe des erfindungsgemäßen Verfahrens vorgenommen werden.

Dies ermöglicht es, eine Gierratenregelung ohne Gierratensensor zuverlässig und sicher durchzuführen.

Für die nun folgenden Ausführungen wird von einer Fahrdynamikregelung ohne Gierratensensor für ein frontgetriebenes Fahrzeug ausgegangen. Die übrige Sensorik soll die vorangegangen beschriebenen Sensoren enthalten, wobei jedoch auf die gesonderte Darstellung der Vorderradgeschwindigkeiten $v_{FL}$ und $v_{FR}$ verzichtet wird.

Bezüglich der Messung der Radgeschwindigkeiten $v_{FL}$, $v_{FR}$, $v_{RL}$ und $v_{RR}$ zeigt sich, dass die Referenzgeschwindigkeit $v_{REF}$, deren Wert aus den Messsignalen von vier Raddrehzahlsensoren gebildet wird, in fast allen Fahrsituationen sehr genau bestimmt werden kann und von Störeinflüssen weitgehend unbeeinflusst ist. Im Gegensatz dazu basiert die Bestimmung der in dem Ersatzsignal $\dot{\psi}_{EST}$ enthaltenen Geschwindigkeitsdifferenz $v_{RR} - v_{RL}$ auf der präzisen Kenntnis der Radgeschwindigkeiten $v_{RR}$ und $v_{RL}$ der Hinterräder. Diese Differenz ist somit als störanfällig einzustufen.

Für die Bildung von Modellen, die jeweils unabhängig von einem der möglicherweise fehlerbehafteten Messsignale sein sollen, werden daher die Referenzgeschwindigkeit $v_{REF}$ und die Differenz $v_{RR} - v_{RL}$ wie unabhängige Prozessgrößen behandelt, wobei die Referenzgeschwindigkeit $v_{REF}$ in jedes der Modelle eingehen kann.

Für die Geschwindigkeitsdifferenz $v_{RR} - v_{RL}$ wird an dieser Stelle die Abkürzung $\Delta v_R = v_{RR} - v_{RL}$ eingeführt.

Ein durch die Fahrdynamikregelung zu regelnder Prozess, wie beispielsweise der Gierratenverlauf für das Fahrzeug, kann nun in Modellen nachgebildet werden, die mit dem Lenkwinkel $\delta$, der Querbeschleunigung $a_{LAT}$, der Fahrzeugreferenzgeschwindigkeit $v_{REF}$ und den Hinterradgeschwindigkeiten $v_{RL}$ und $v_{RR}$ bzw. der Differenz $\Delta v_R$ konstruiert werden. Größen f deren Werte einer direkten Messung nicht zugänglich sind, ergeben sich also in einem maximalen Modell, d.h. einem Modell mit der maximalen Anzahl enthaltener Größen, zu $f = f(\delta, a_{LAT}, \Delta v_R)$, wobei die Abhängigkeit von der Referenzgeschwindigkeit $v_{REF}$ und die Abhängigkeit von den Fahrzeugparametern p hier nicht explizit dargestellt wird.

Dabei fällt zunächst auf, dass auch das Ersatzsignal $\dot{\psi}_{EST}$ nicht in dem maximalen Modell gebildet ist, da es unabhängig von dem Lenkwinkel $\delta$ berechnet wird. Es hat sich jedoch empirisch gezeigt, dass diese Nachbildung des Gierratensignals $\dot{\psi}$ in den meisten Fahrsituationen einen sehr zuverlässigen Wert für die Gierrate $\dot{\psi}$ angibt.

Zudem wird die ESP-Regelung grundsätzlich so durchgeführt, dass Werte für die Stellgrößen in Abhängigkeit der Regelabweichung zwischen dem Ersatzsignal $\dot{\psi}_{EST}$ und einem Sollwert für die Gierrate bestimmt werden. Die Sollwerte ergeben sich dabei anhand der Referenzgeschwindigkeit $v_{REF}$ und des Lenkwinkel $\delta$ aus einem Fahrzeugreferenzmodell. Somit wird der Lenkwinkel $\delta$ im Rahmen der Regelung anhand des Ersatzsignals $\dot{\psi}_{EST}$ implizit ebenfalls berücksichtigt.

Aufgrund der Tatsache, dass der Sollwert anhand des Lenkwinkels $\delta$ gebildet wird, ist es sogar zu bevorzugen, den Istwert anhand eines Modells zu bestimmen, das unabhängig von dem Lenkwinkel δ ist.

Es lassen sich nun verschiedene Teilmodelle des maximalen Modells bilden, die mit verschiedenen Mengen von Prozessgrößen gebildet werden, die jeweils eine Untermenge der Menge aller gemessenen Prozessgrößen bilden. Jedes dieser Hilfsmodelle ist damit unabhängig von Messwerten mindestens eines der Sensoren des Sensorclusters und damit auch unempfindlich gegenüber Störungen des entsprechenden Sensors.

Entsprechend der vorangegangenen Argumentation bezüglich der Signale der Radgeschwindigkeiten $v_{FL}$, $v_{FR}$, $v_{RL}$ und $v_{RR}$, werden die Hilfsmodelle in dem betrachteten Ausführungsbeispiel mit Mengen von Größen gebildet, die (echte) Teilmengen der Menge $\{\delta, a_{LAT}, \Delta v_R\}$ sind. Zusätzlich können die Modelle von der Referenzgeschwindigkeit $v_{REF}$ abhängen.

In Modell 1 wird die Regelgröße, also in diesem Falle die Gierrate $\dot{\psi}$, durch einen Zusammenhang der Form

$$f_1 = f_1(\delta, a_{LAT})$$

dargestellt. Das Modell 1 verzichtet somit auf das Signal, das den Wert der Geschwindigkeitsdifferenz $\Delta v_R$ repräsentiert.

In Modell 2 gilt für eine Regelgröße eine Relation der Form

$$f_2 = f_2(a_{LAT}, \Delta v_R)$$

so dass dieses Modell unabhängig von dem Messsignal des Lenkwinkelsensors ist.

Und schließlich wird bei dem Modell 3 das Messsignal für die Querbeschleunigung $a_{LAT}$ ausgeschlossen. Für die in diesem Modell ermittelte Regelgröße gilt also

$$f_3 = f_3(\delta, \Delta v_R).$$

Für die Modelle wird nun separat untersucht, ob innerhalb der Modelle ein Regelungsbedarf für das Gesamtsystem besteht.

Im Fall von Modell 1 kann dies beispielsweise durch einen Vergleich der aus Lenkwinkel 8 und Querbeschleunigung $a_{LAT}$ berechneten stationären Gierraten $\dot{\psi}_\delta$ und $\dot{\psi}_{a_{LAT}}$ geschehen. Es werden dabei also Abweichungen zwischen dem Signal

$$\dot{\psi}_\delta = \frac{\delta \cdot v_{REF}}{1 + eg \cdot v_{REF}^2}$$

für die Gierrate $\dot{\psi}_\delta$, bei dem 1 den Radstand des Fahrzeugs und eg dessen Eigenlenkgradienten bezeichnet, und dem Signal

$$\dot{\psi}_{a_{LAT}} = \frac{a_{LAT}}{v_{REF}}$$

für die Gierrate $\dot{\psi}_{a_{LAT}}$ bestimmt, die bei Überschreiten eines gewissen Schwellenwertes auf einen Regelbedarf hindeuten. In dem Modell 1 wäre es jedoch auch gleichfalls möglich, den Wert von $\dot{\psi}_{a_{LAT}}$ mit dem von der ESP-Regelung anhand des Lenkwinkels δ bestimmten Sollwert für die Gierrate $\dot{\psi}$ zu vergleichen, um einen Regelbedarf zu erkennen. Ein Vergleich des Wertes von $\dot{\psi}_\delta$ mit dem Sollwert ist im Allgemeinen jedoch nicht bevorzugt, da in diesem Fall sowohl der Sollwert als der einem möglichen Regelbedarf zugrunde liegende Istwert der Regelgröße von dem Messsignal des Lenkwinkels δ abhängen. In bestimmten Fahrsituationen kann dieser Vergleich jedoch ebenfalls durchgeführt werden. Ferner können zur Absicherung des Regelbedarfs für das Modell 1 mehrere oder alle beschriebenen Vergleiche vorgesehen sein.

Für das Modell 2 kann anhand der Querbeschleunigung $a_{LAT}$ und der Radgeschwindigkeitsdifferenz $\Delta v_R$ der Schwimmwinkel β des Fahrzeugs durch den Ausdruck

$$\beta = \int \left[ \dot{\psi}_{EST} - \frac{a_{LAT}}{v_{REF}} \right] dt$$

abgeschätzt werden. Der dadurch ermittelte Wert für den Schwimmwinkel β, welcher nicht vom Lenkwinkel δ abhängig ist, kann dann zur Feststellung eines Regelbedarfs herangezogen werden. Dies entspricht dem Vergleich des bereits für das Modell 1 bestimmten Signals $\dot{\psi}_{a_{LAT}}$ mit dem Ersatzsignal $\dot{\psi}_{EST}$ zur Feststellung des Regelbedarfs.

Für eine Überprüfung des Regelbedarfs für das Modell 3 können Gierratensignale verglichen werden, die aus der Radgeschwindigkeitsdifferenz $\Delta v_R$ und dem Lenkwinkel δ gebildet werden. Es kann also beispielsweise ein Vergleich des Signals

$$\dot{\psi}_{\Delta v_R} = c_1 \cdot \Delta v_R - c_2 \frac{\delta \cdot v_{REF}^3}{1 + eg \cdot v_{REF}^2}$$

mit dem Signal $\dot{\psi}_\delta$ durchgeführt werden, um bei einer einen gewissen Schwellenwert überschreitenden Abweichung zwischen den beiden Signalen einen Regelungsbedarf festzustellen. Ebenfalls ist es, analog zu Modell 1, möglich, entweder das Signal $\dot{\psi}_{\Delta v_R}$ oder das Signal $\dot{\psi}_\delta$ oder beide Signale mit dem von der ESP-Regelung bestimmten Sollwert für die Gierrate $\dot{\psi}$ zu vergleichen.

Der Phasenverlauf aller Hilfsmodelle sollte durch eine geeignete Signalverarbeitung, insbesondere eine geeignete Filterung, den Anforderungen des Gesamtsystems angepasst werden.

Darüber hinaus sollte eine Bewertung des Regelbedarfs in den einzelnen Teilmodellen durch eine Situationserkennung ergänzt werden. Die Güte der einzelnen Modelle in einer bestimmten Situation kann so festgestellt werden, wie vorangehend bereits am Beispiel von zumindest qualitativ erfassbaren Störungen, wie eine Fahrbahnneigung oder ein Bremseingriff, erläutert wurde. Ferner ist ein Fahrzeugreferenzmodell in das Regelungssystem implementiert, das es der Situationserkennung erlaubt zu ermitteln, welche Modelle in das Fahrzeugverhalten in einer Situation hinreichend genau beschreiben.

Die Regellogik der hier dargestellten Gierratenregelung ohne Gierratensensor muss nun geringfügig gegenüber der Standardregellogik des Regelungssystems mit Gierratensensor erweitert werden.

Zunächst wird dabei durch die Standardregellogik festgestellt, ob aufgrund einer Regelabweichung zwischen dem Ersatzgierratensignal $\dot{\psi}_{EST}$ und dem Sollwert der Gierrate $\dot{\psi}$ die Eintrittsbedingung für einen Regeleingriff erfüllt sind.

Vor Beginn des Regeleingriffs werden jedoch alle Hilfsmodelle, wie vorstehend beschrieben, ausgewertet. Erst nach dieser Auswertung wird entschieden, ob ein uneingeschränkter Regeleingriff, ein eingeschränkter Regeleingriff oder möglicherweise überhaupt kein Regeleingriff vorgenommen wird.

Eine uneingeschränkte Regelung wird dabei nur dann zugelassen, wenn sowohl anhand des Wertes des Ersatzsignals $\dot{\psi}_{EST}$ als auch in allen Hilfsmodellen ein Regelungsbedarf besteht. In diesem Fall erfolgt der Regeleingriff, insbesondere bezüglich seiner Dauer und seiner Stärke, wie im Fall einer herkömmlichen Fahrdynamikregelung mit Gierratensensor.

Besteht nicht in allen Hilfsmodellen ein Regelungsbedarf, so ist zu vermuten, dass eines der Eingangssignale gestört ist und dass möglicherweise tatsächlich keine Situation vorliegt, die einen Regeleingriff erfordert. Aufgrund der eingeschränkten Informationen, mit denen das Gierratensignal innerhalb der Prozessmodelle gebildet wird, ist es aber ebenso möglich, dass tatsächlich keine Signalstörung und somit ein Regelungsbedarf besteht.

Daher wird ein Regeleingriff auch dann vorgenommen, wenn zwar nicht für alle, jedoch für die Mehrzahl der Modelle ein Regelungsbedarf besteht. In diesem Fall wird allerdings ein eingeschränkter Regeleingriff vorgenommen, um die Auswirkung eines fehlerhaften Regeleingriffs zu verringern, für den in diesem Fall eine gewisse endliche Wahrscheinlichkeit besteht.

Der Regeleingriff wird dabei in Abhängigkeit der einen Regelbedarf anzeigenden Modelle in seiner Dauer und/oder in seiner Stärke eingeschränkt.

Zeigt beispielsweise Modell 1 als einziges Modell keinen Regelungsbedarf, so werden nur Druckanforderungen bis maximal 15 bar für den Bremsdruck zugelassen. Falls andererseits nur für das Modell 2 als einziges Modell kein Regelungsbedarf besteht, so werden von der Regellogik nur Regeleingriffe einer maximalen Dauer von 300 ms gestattet.

Falls schließlich nur für eine Minderzahl der Modelle ein Regelungsbedarf besteht, so muss mit hoher Wahrscheinlichkeit von der Störung eines Messsignals ausgegangen werden. Ein Regeleingriff wird in diesem Fall vollständig unterdrückt.

Das vorgestellte Prinzip der kombinierten Betrachtung von Standardlogik und Hilfsmodellen ist in der einzigen Figur anhand von Schnittflächen von vier Kreisen veranschaulicht. Der Kreis 10 stellt dabei die Standardlogik des ESP-Systems auf der Grundlage des Ersatzsignals $\dot{\psi}_{EST}$ dar, bei der für die Zustände des Systems, die durch Punkte innerhalb des Kreises 10 repräsentiert werden, ein Regelungsbedarf für das ESP-System besteht.

Analog repräsentieren die Kreisflächen 20, 30 und 40 einen Regelbedarf für die Modelle 1,2 und 3.

Durch die unterschiedliche Einfärbung verschiedener Segmente ist in der Figur nun veranschaulicht, unter welchen Bedingungen ein Regelungseingriff vorgenommen wird. Die hellgrau eingefärbten Abschnitte stehen dabei für eingeschränkte Regeleingriffe und der dunkelgrau eingefärbte Abschnitt repräsentiert uneingeschränkte Regeleingriffe.

Anhand dieser Logik ermöglicht es die Erfindung, fehlerhafte Regeleingriffe zu vermeiden und notwenige Regeleingriffe mit hoher Zuverlässigkeit zu erkennen und durchzuführen. Insbesondere die Möglichkeit, eingeschränkte Regeleingriffe vornehmen zu können, erweist sich dabei als vorteilhafter Kompromiss, der die Wahrscheinlichkeitsverteilung des Auftretens von Störungen der Messsignale berücksichtigt.

Dies wird auch durch die Beobachtung gestützt, dass Regelungszyklen mit eingeschränkten Regeleingriffen häufig unmittelbar vor oder nach einer uneingeschränkten Regelung auftreten, da in einigen Prozessmodellen ein Regelbedarf zu spät erkannt und/oder zu früh zurückgesetzt wird. Dies führt im Allgemeinen nicht zu einer signifikanten Reduzierung der Regelgüte, so dass die Funktionalität des Regelungssystems gegenüber der Funktionalität eines Regelungssystems mit vollständiger Sensorik nahezu gleichwertig erhalten bleibt.

Die vorgestellte Regelungslogik bewirkt nur dann eine unzureichende Regelung, wenn aufgrund einer Signalstörung kein Regelungsbedarf für das Gesamtsystem festgestellt wurde, jedoch tatsächlich ein Regelungsbedarf besteht.

In diesem Fall können die Modelle jedoch anhand einer Situationserkennung ausgewertet werden, um zu ermitteln, welches der Messsignale gestört ist. In dem voranstehend beschriebenen Beispiel wurde diesbezüglich beispielhaft dargestellt, dass eine Störung der Radgeschwindigkeiten $v_{FL}$, $v_{FR}$, $v_{RL}$ und $v_{RR}$ durch einen Bremseingriff ermittelt wird.

Es kann dann, wie oben beschrieben, für eine begrenzte Zeit auf ein Ersatzsignal, bei einer Störung der Raddrehzahlsensoren z.B. auf das Signal $\dot{\psi}_{EST,TEMP}$, umgeschaltet werden.

Dieser Modus, in dem ein Umschalten zwischen mehreren Ersatzsignalen möglich ist, gestattet es dabei insbesondere, einen bereits aktiven Regelungszyklus beim Auftreten einer Störung nicht sofort abbrechen zu müssen. Da nach dem Umschalten auf ein anderes Signal jedoch keine weitere Absicherung der Signale mehr möglich ist, ist es sinnvoll, Höhe und Dauer der Regelanforderung zu begrenzen.

Die Erfindung stellt somit ein vorteilhaftes Verfahren zum Regeln eines Prozesses bereit, das es ermöglicht, ein Ersatzsignal für ein entfallenes bzw. ausgefallenes Sensorsignal zu bilden, das in die bestehende Standard-Regellogik eingespeist wird. Soweit es möglich ist, werden erfassbare Störungen des Ersatzsignals kompensiert oder eliminiert; alternativ wird vorübergehend auf ein weiteres temporäres Ersatzsignal umgeschaltet.

Neben dem ersten Prozessmodell, in dem das Ersatzsignal gebildet wird, werden weitere Prozessmodelle konstruiert, für die individuell ein Regelbedarf untersucht wird. Nach einer Auswertung dieser Modelle wird entschieden, ob Regelanforderungen uneingeschränkt umgesetzt werden, oder ob Stärke und/oder Dauer der Eingriffe begrenzt werden, oder ein Regeleingriff vollständig unterdrückt wird. Damit werden fehlerhafte Regeleingriffe aufgrund nicht erfassbarer Störungen wirkungsvoll verhindert, bzw. in ihrer Auswirkung begrenzt.

**Bezugszeichenliste:**

| | |
|---|---|
| $a_{LAT}$ | Querbeschleunigung |
| $\beta$ | Schwimmwinkel |
| $c_1$ | Fahrzeugparameter |
| $c_2$ | Fahrzeugparameter |
| $\delta$ | Lenkwinkel |
| eg | Eigenlenkgradient |
| $f_1$ | Ersatzsignal für das Regelgrößensignal in Modell 1 |
| $f_2$ | Ersatzsignal für das Regelgrößensignal in Modell 2 |
| $f_3$ | Ersatzsignal für das Regelgrößensignal in Modell 3 |
| l | Radstand |
| p | Fahrzeugparameter |
| $\dot{\psi}$ | Gierrate bzw. Gierratensignal |
| $\dot{\psi}_{EST}$ | Ersatzsignal für das Gierratensignal |
| $\dot{\psi}_{EST,TEMP}$ | temporäres Ersatzsignal für das Gierratensignal |
| $\dot{\psi}_{\delta}$ | anhand des Lenkwinkels bestimmte Gierrate |
| $\dot{\psi}_{aLAT}$ | anhand der Querbeschleunigung ermittelte Gierrate |
| $\Delta\dot{\psi}_{EST}$ | Differenz zwischen Gierratensignalen |

| | |
|---|---|
| $v_{FL}$ | Radgeschwindigkeit des linken Vorderrades |
| $v_{FR}$ | Radgeschwindigkeit des rechten Vorderrades |
| $v_{RL}$ | Radgeschwindigkeit des linken Hinterrades |
| $v_{RR}$ | Radgeschwindigkeit des rechten Hinterrades |
| $v_{REF}$ | Referenzgeschwindigkeit |
| $\Delta v_R$ | Differenz $v_{RR} - v_{RL}$ |

10    Kreis, dessen Fläche den Regelbedarf aufgrund des Ersatzsignals für das Regelgrößensignal darstellt

20    Kreisfläche, die den Regelbedarf für das Modell 1 repräsentiert

30    Kreisfläche, die den Regelbedarf für das Modell 2 repräsentiert

40    Kreisfläche, die den Regelbedarf für das Modell 3 repräsentiert

**Patentansprüche**

**1.** Verfahren zum Regeln eines Prozesses zur Durchführung einer Fahrdynamikregelung, bei dem ein Regelbedarf in Abhängigkeit einer aus dem Vergleich eines Sollwerts mit einem Istwert einer Gierrate des Fahrzeugs ($\dot{\Psi}$) ermittelten Regelabweichung ermittelt wird, **dadurch gekennzeichnet, dass** der Istwert der Gierrate ($\dot{\Psi}$) anhand eines ersten Prozessmodells ($\dot{\Psi}_{EST}$) bestimmt wird und der Regelbedarf (10) zusätzlich überprüft wird, indem Regelbedürfnisse (20, 30, 40) aufgrund von Werten der Gierrate ($\dot{\Psi}$), die anhand von weiteren Prozessmodellen bestimmt werden, ermittelt und durch logische Verknüpfungen miteinander so verknüpft werden, dass ein Regelbedarf (20) nur dann festgestellt wird, wenn für die Mehrzahl der weiteren Prozessmodelle ein Regelbedarf (20, 30, 40) besteht.

**2.** Verfahren nach Anspruch 1, **dadurch gekennzeichnet, dass** die weiteren Prozessmodelle mit verschiedenen Teilmengen einer Menge von gemessenen Größen ($\delta$, $a_{LAT}$, $V_{REF}$, $v_{RL}$, $V_{RR}$) gebildet werden.

**3.** Verfahren nach einem oder mehreren der vorangegangenen Ansprüche, **dadurch gekennzeichnet, dass** ein uneingeschränkter Regeleingriff aufgrund der Regelabweichung zwischen dem Sollwert und dem anhand des ersten Prozessmodells ermittelten Istwertes ($\dot{\psi}_{EST}$) nur dann vorgenommen wird, wenn für alle weiteren Prozessmodelle ein Regelungsbedarf (20, 30, 40) besteht.

**4.** Verfahren nach einem oder mehreren der vorangegangenen Ansprüche,
**dadurch gekennzeichnet,**
**dass** ein Regeleingriff mit verringerter Dauer vorgenommen wird, wenn nicht für alle weiteren Prozessmodelle ein Regelungsbedarf (20, 30, 40) besteht.

5. Verfahren nach einem oder mehreren der vorangegangenen Ansprüche,
**dadurch gekennzeichnet,**
**dass** ein Regeleingriff mit verminderter Stärke vorgenommen wird, wenn für alle weiteren Prozessmodelle ein Regelungsbedarf (20, 30, 40) besteht.

6. Verfahren nach einem oder mehreren der vorangegangenen Ansprüche,
**dadurch gekennzeichnet,**
**dass** ein Regeleingriff vollständig unterdrückt wird, wenn für keines der weiteren Prozessmodelle ein Regelungsbedarf (20, 30, 40) besteht.

7. Verfahren nach einem oder mehreren der vorangegangenen Ansprüche,
**dadurch gekennzeichnet,**
**dass** ein Wert einer Stellgröße in Abhängigkeit wenigstens eines anhand der weiteren Prozessmodelle ermittelten Wertes der Gierrate modifiziert wird.

8. Verfahren nach einem oder mehreren der vorangegangenen Ansprüche,
**dadurch gekennzeichnet,**
**dass** es sich bei dem Prozess um einen Gierratenverlauf eines Fahrzeugs handelt.

9. Verfahren nach einem oder mehreren der vorangegangenen Ansprüche,
**dadurch gekennzeichnet,**
**dass** anhand der Verknüpfung der anhand der Teilmodelle ermittelten Werte der Gierrate untereinander und/oder anhand der Verknüpfung dieser Werte mit vorgegebenen Grenzwerten eine Fahrsituation ermittelt wird, bei der eine Regelung der Fahrstabilität erfolgt.

**Claims**

1. Method for closed-loop control of a process for closed-loop vehicle dynamics control, in which a need for closed-loop control is established from a system deviation established depending on a comparison between a setpoint value and an actual value of a yaw rate of the vehicle ($\dot{\Psi}$),
**characterized in that** the actual value of the yaw rate ($\dot{\Psi}$) is determined on the basis of the first process model ($\dot{\Psi}_{EST}$) and the need for closed-loop control (10) is additionally checked by virtue of closed-loop control requirements (20, 30, 40) being established on the basis of values of the yaw rate ($\dot{\Psi}$), which are determined on the basis of further process models, and being linked by logic operations in such a way that a need for closed-loop control (20) is only determined if there is a need for closed-loop control (20, 30, 40) for the plurality of further process models.

2. Method according to Claim 1,
**characterized**
**in that** the further process models are formed with different subsets of a set of measured variables ($\delta$, $a_{LAT}$, $v_{REF}$, $v_{RL}$ $v_{RR}$).

3. Method according to one or more of the preceding claims,
**characterized**
**in that** an unrestricted control intervention due to the system deviation between the setpoint value and the actual value ($\dot{\Psi}_{EST}$) established on the basis of the first process model is only undertaken if there is a need for closed-loop control (20, 30, 40) for all further process models.

4. Method according to one or more of the preceding claims,
**characterized**
**in that** a control intervention with a reduced duration is undertaken if there is not a need for closed-loop control (20, 30, 40) for all further process models.

5. Method according to one or more of the preceding claims,
**characterized**
**in that** a control intervention with a reduced magnitude is undertaken if there is a need for closed-loop control (20, 30, 40) for all further process models.

6. Method according to one or more of the preceding claims,
**characterized**
**in that** the control intervention is completely suppressed if there is no need for closed-loop control (20, 30, 40) for any of the further process models.

7. Method according to one or more of the preceding claims,
**characterized**
**in that** a value of a setpoint variable is modified dependent on at least one value of the yaw rate established on the basis of the further process models.

8. Method according to one or more of the preceding claims,
**characterized**
**in that** the process is a yaw rate profile of the vehicle.

9. Method according to one or more of the preceding claims,
**characterized**

**in that** a driving situation in which there is closed-loop control of the driving stability is established on the basis of the linking of the values of the yaw rate established on the basis of the partial models amongst themselves and/or on the basis of the linking of these values with predetermined limit values.

## Revendications

1. Procédé de régulation d'un processus d'exécution d'une régulation dynamique de roulage, dans lequel un besoin de régulation est déterminé en fonction d'un écart de régulation déterminé à partir de la comparaison entre une valeur de consigne et une valeur effective de la vitesse de lacet du véhicule ($\psi$),
   **caractérisé en ce que**
   la valeur effective de la vitesse de lacet ($\psi$) est définie au moyen d'un premier modèle ($\psi_{EST}$) du processus et le besoin de régulation (10) est en outre vérifié en déterminant des besoins de régulation (20, 30, 40) sur la base de valeurs de la vitesse de lacet ($\psi$) qui ont été déterminées par d'autres modèles du processus et en les associant les unes aux autres par des associations logiques de telle sorte qu'un besoin de régulation (20) n'est constaté que si un besoin de régulation (20, 30, 40) existe pour les différents autres modèles de processus.

2. Procédé selon la revendication 1, **caractérisé en ce que** les autres modèles du processus sont formés de différentes parties d'un certain nombre de grandeurs mesurées ($\delta$, $a_{LAT}$, $V_{REF}$, $V_{RL}$, $V_{RR}$).

3. Procédé selon l'une ou plusieurs des revendications précédentes, **caractérisé en ce qu'**une intervention non restreinte de régulation n'est effectuée sur la base de l'écart de réglage entre la valeur de consigne et de la valeur effective ($\psi_{EST}$) déterminée à l'aide du premier modèle de processus que si un besoin de régulation (20, 30, 40) existe pour tous les autres modèles du processus.

4. Procédé selon l'une ou plusieurs des revendications précédentes, **caractérisé en ce qu'**une intervention de régulation de durée limitée est effectuée s'il n'existe pas de besoin de régulation (20, 30, 40) pour tous les autres modèles de processus.

5. Procédé selon l'une ou plusieurs des revendications précédentes, **caractérisé en ce qu'**une intervention de régulation d'intensité réduite est effectuée si un besoin de régulation (20, 30, 40) existe pour tous les autres modèles du processus.

6. Procédé selon l'une ou plusieurs des revendications précédentes, **caractérisé en ce qu'**aucune intervention de régulation n'est effectuée si un besoin de régulation (20, 30, 40) n'existe pour aucun des autres modèles du processus.

7. Procédé selon l'une ou plusieurs des revendications précédentes, **caractérisé en ce qu'**une valeur d'une grandeur de réglage est modifiée en fonction d'au moins une valeur de la vitesse de lacet déterminée à l'aide des autres modèles du processus.

8. Procédé selon l'une ou plusieurs des revendications précédentes, **caractérisé en ce que** le processus est l'évolution de la vitesse de lacet d'un véhicule.

9. Procédé selon l'une ou plusieurs des revendications précédentes, **caractérisé en ce qu'**une situation de conduite dans laquelle une régulation de la stabilité de conduite a lieu est déterminée à l'aide de l'association des valeurs déterminées à l'aide des modèles partiels et/ou à l'aide de l'association de ces valeurs à des valeurs limites prédéterminées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19515059
- DE 19811547
- DE 19921692 A1
- DE 19515059 A1
- DE 19921692